**Europäisches Patentamt**

**European Patent Office**

**Office européen des brevets**

(19)

(11) **EP 1 462 917 A1**

(12) ## EUROPEAN PATENT APPLICATION

(43) Date of publication:
**29.09.2004 Bulletin 2004/40**

(51) Int Cl.7: **G06F 3/033**

(21) Application number: **03006938.9**

(22) Date of filing: **26.03.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK RO**

(71) Applicant: **High Tech Computer Corp.**
**Taoyuan (TW)**

(72) Inventors:
• **Chuang, Hsun-Hsin**
 **Tauyuan Hsien (TW)**

• **Hsieh, Chih-Chao**
 **Hsin-Tien City, Taipei Hsien (TW)**
• **Chen, Boshiun**
 **San Hsia Chen, Taipei Hsien (TW)**

(74) Representative: **Becker Kurig Straus**
**Patentanwälte**
**Bavariastrasse 7**
**80336 München (DE)**

(54) **Touch panel threshold pressure setup method and apparatus**

(57)   A touch panel threshold pressure setup method and apparatus. In this touch panel threshold pressure setup method, at first multiple touches are performed when the setup is run, and with this, the multiple pressure values can be obtained. Then, the obtained pressure values are averaged to obtain an average pressure value. Finally, the average pressure value itself or a value obtained from a certain multiplier multiplied by the obtained average pressure value is used as a threshold pressure value. Moreover, the pressure value mentioned above can be represented by the contact resistance value if the resistance type touch panel is used. However, the pressure value is inverse proportional to the contact resistance value that represents it.

FIG. 1

EP 1 462 917 A1

**Description**

BACKGROUND OF THE INVENTION

Field of Invention

The present invention generally relates to a touch panel pressure setup method and apparatus, and more particularly, to a touch panel threshold pressure setup method and apparatus that can dynamically regulate its pressure threshold value.

Description of Related Art

All kinds of input devices related to the graph input are widely used by the public currently, such as the scanner, the hand writing device or the Personal Digital Assistant (PDA). The hand writing device and PDA generally use the touch panel as an interface. With this, the trace or motion of the object on the touch panel can be converted into an electronic signal, so that the objective of inputting the information can be achieved. In general, the touch panel determines where the current contact point is by analyzing the pressure applied on it. Therefore, how to accurately determine the position of the contact point and how to determine whether the object touches the surface of the touch panel are crucial factors to differentiate the touch panel quality.

In general the touch panel determines whether the object touches the touch panel or where the object touches the touch panel by measuring the magnitude of the contact resistance based on whether the measured contact resistance is smaller than a certain fixed value. Therefore, in the determination process, the product specification becomes an internal variable factor. In other words, since the system vendors adopt a fixed threshold pressure value (or threshold resistance value) when they manufacture the product, when the manufacture vendor of the touch panel is not the same, or the specifications of the touch panel are different, this fixed threshold pressure value is not certain to have the touch panel operate normally. If the threshold pressure value set by the system vendor is smaller than the specification range of the touch panel itself, the system very possibly will react to many different kinds of small touch. Moreover, when the threshold pressure value is much smaller than the specification range of the touch panel itself, the system may perform unwanted operations under the conditions of no touch or the careless small touch. Contrarily, if the threshold pressure value set by the system vendor is greater than the specification range of the touch panel itself, the system hardly reacts to pressure on the touch panel to generate the appropriate reaction.

Therefore, one problem that will be encountered by the system vendor when the system is manufactured is: in order to have the system operate normally, different threshold pressure values have to be set for different touch panels. If not, the system may not operate normally, or the system may make the wrong decision and perform many unneeded operations even when the system is not touched by anybody. Thus, not only is the power energy wasted, but also when the touch panel is applied in any precise way, it may generate many error results.

In summary, it is believed that many system vendors aspire after a method that can automatically regulate the threshold pressure value according to the variance of the touch panel to save the setup and testing cost.

SUMMARY OF THE INVENTION

Therefore, the present invention provides a touch panel threshold pressure setup method and apparatus to regulate the system's threshold pressure value (or the threshold resistance value) according to the specification or the characteristic of the touch panel itself.

The present invention provides a touch panel threshold pressure setup method. In this touch panel threshold pressure setup method, at first multiple touches are performed when the setup is run, and multiple samplings are performed in each touch. With this, the multiple pressure values can be obtained. Then, the obtained pressure values are averaged to obtain an average pressure value. Finally, the average pressure value itself or a value obtained from a certain multiplier multiplied by the obtained average pressure value is used as a threshold pressure value.

In an embodiment of the present invention, since the resistance type touch panel is used, the pressure value is obtained by measuring the contact resistance of every point in the touch panel. Similarly, in the present embodiment, at first the touch panel is touched many times, and multiple sampling is performed on every touch to obtain multiple contact resistance values. Then, these multiple contact resistance values are averaged, and the average contact resistance obtained from the average operation is used as the threshold resistance when the pressure reaches the threshold pressure, or a certain multiple of the average contact resistance value is used as the threshold resistance value.

The present invention further provides a touch panel pressure setup apparatus. The touch panel pressure setup apparatus comprises a touch surface, a sense element, and a calculation and setup element, wherein the touch surface receives a touch from outside. The sense element senses that the touch happened on the touch surface, and converts the touch to the corresponding pressure value according to the electronic signal generated when the touch surface is touched. The calculation and setup element then receives multiple pressure values generated by the sense element and averages these pressure values, and further sets a predetermined multiple of the averaged value as the threshold pressure value.

In another embodiment of the present invention, the touch panel pressure setup apparatus can be applied in portable electronic instruments such as the Hand-Held PC, the pocket PC or the Personal Digital Assistant (PDA). However, these portable electronic instruments only react to the touch whose pressure is greater than the setting threshold pressure value.

In summary, the present invention determines the threshold pressure (or the threshold resistance) of the touch panel by detecting the reaction of the touch panel and by responding with a factor when the system is power on and initialized. Therefore, it is assured that the touch panel can normally react normally to the pressure applied under ordinary conditions. However, the touch panel does not react to the touch that is too light such as the careless touch. Therefore, the present invention can dynamically regulate the system sensitivity according to the variance of the touch panels, so that all kinds of defect that may result from the prior art can be eliminated.

BRIEF DESCRIPTION OF THE DRAWINGS

The accompanying drawings are included to provide a further understanding of the invention, and are incorporated in and constitute a part of this specification. The drawings illustrate embodiments of the invention, and together with the description, serve to explain the principles of the invention. In the drawings,

FIG. 1 schematically shows a configuration diagram of a resistance type touch panel;

FIG. 2 schematically shows an operation step flow chart of a preferred embodiment according to the present invention;

FIG. 3 schematically shows an operation step flow chart of the other preferred embodiment according to the present invention to setup the threshold pressure;

FIG. 4 schematically shows a block diagram of a touch panel pressure setup apparatus of a preferred embodiment according to the present invention.

DESCRIPTION OF THE PREFERRED EMBODIMENTS

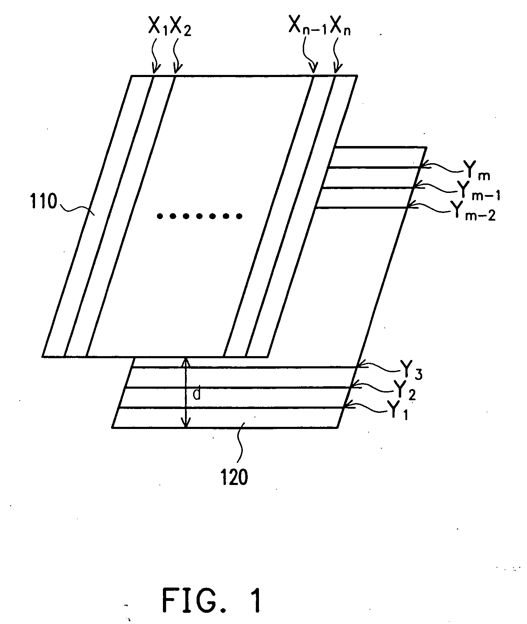

In order to more easily understand the technology of the present invention, the most commonly used touch panel and the configuration thereof as well as the basic operation method of the resistance type touch panel are introduced hereinafter. FIG. 1 schematically shows a configuration diagram of a commonly used resistance type touch panel. The resistance type touch panel comprises two flat sheets, one is an X-axis resistive sheet 110, the other is a Y-axis resistive sheet 120. The distance between the X-axis resistive sheet 110 and the Y-axis resistive sheet 120 is d. There are n vertical lines $(X_1, X_2, ..., X_n)$ distributed on the X-axis resistive sheet 110 and m horizontal lines $(Y_1, Y_2, ..., Y_m)$ distrib-

uted on the Y-axis resistive sheet 120. When there is no pressure applied, the resistance between the X-axis resistive sheet 110 and the Y-axis resistive sheet 120 is very large. When some point suffers a certain amount of the pressure, the X-axis resistive sheet 110 and the Y-axis resistive sheet 120 will contact each other.

In order to find the point that suffers the press, the touch panel sequentially applies a voltage to all the vertical lines and horizontal lines under the normal operation, so that the voltages can be gradually distributed along the vertical or horizontal direction respectively. Moreover, when the vertical lines are applied with the voltage, the horizontal lines are used as the detectors to detect the voltage variance on the vertical lines, so that the position of the pressed point in the vertical direction (i.e. the position on some horizontal line $Y_A$) can be obtained. In a similar way, when the horizontal lines are applied with the voltage, the vertical lines are used as the detectors to detect the voltage variance on the horizontal lines, so that the position of the pressed point in the horizontal direction (i.e. the position on some vertical line $X_A$) can be obtained. By using such design, the position of the pressed point in the horizontal and vertical direction $(X_A, Y_A)$ can be obtained. By using the obtained position of the pressed point and responding with the formula that calculates the contact resistance, the contact resistance of the pressed point can be calculated and obtained. Under normal conditions, the bigger the pressure the pressed point suffers, the smaller the contact resistance is. Contrarily, the smaller the pressure the pressed point suffers, the bigger the contact resistance measured.

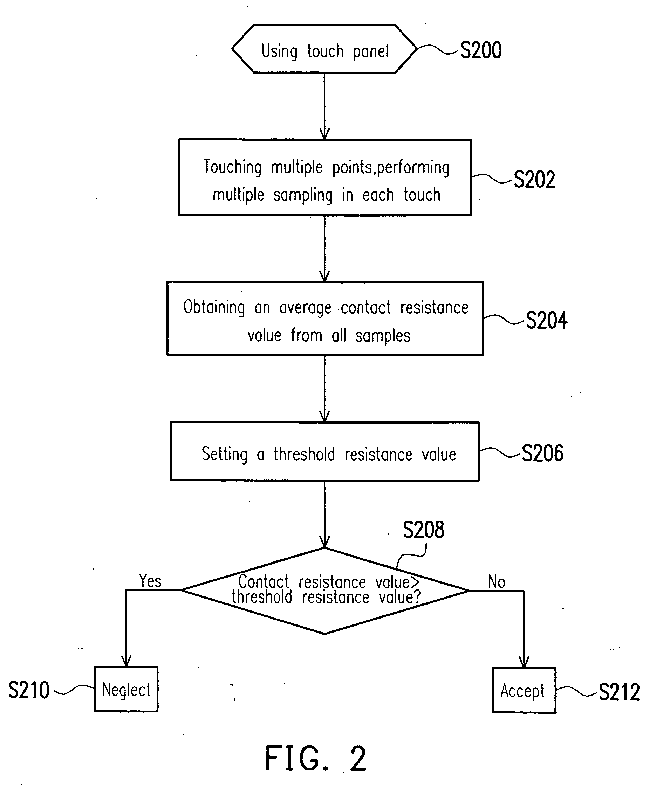

FIG. 2 schematically shows an operation step flow chart of a preferred embodiment according to the present invention. In the present embodiment, calibration is needed when the touch panel starts to be used (step S200). However, in the general calibration process, multiple points on the touch panel such as the five points composed of the four corner points and one central point need to be touched. Other calibration contact points can be optionally selected and so these are not limited to the four corner points and one central point. The present invention performs at least one time multiple sampling on the contact point of one of the touches among the multiple touches when the calibration process is performed (step S202). In each sampling, the position of the horizontal direction and the vertical direction (the $X_A$ and $Y_A$ mentioned above) can be obtained via the sampling, so as to further obtain the contact resistance value of the contact point, and subsequently average all obtained contact resistances to obtain the average contact resistance value (step S204). The setup of the threshold resistance value is determined by the following equation:

$$R_{TH} = R_Z * C$$

Wherein, $R_{TH}$ is the threshold resistance value, $R_Z$ is the average contact resistance, C is a predetermined multiplier such as 1.5. The predetermined multiplier can be any other value and should not be limited to the figure exemplified in the present embodiment.

After the setup of the threshold resistance value in step S206 is completed, the subsequent operations to the touch panel are performed according to the threshold resistance value. Therefore, in step S208, the system determines whether the contact resistance measured from each time's measurement is greater than the setting threshold resistance. If it is, it means the pressure applied to the touch panel by the touch is too small, thus it is neglected (step S210). If the measured contact resistance is smaller than or equal to the setting threshold resistance value, it means the pressure applied to the touch panel reaches a standard level that makes the system react. Therefore, the system receives this signal and generates the corresponding operation (step S212).

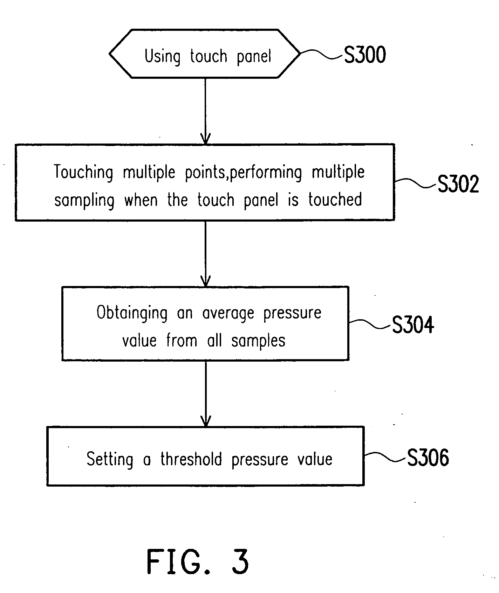

FIG. 3 schematically shows an operation step flow chart of another preferred embodiment according to the present invention to setup the threshold pressure. In the present embodiment, when the touch panel is performing the calibration (step S300), the multiple sampling can be obtained via touching some positions on the touch panel (step S302). Similarly, the contact point that is touched in the calibration can be optionally selected and should not be limited to any specific area. After obtaining the pressure value of the contact point via the sampling, these pressure values are averaged to obtain an average pressure value (step S304). Finally, the threshold pressure value can be set according to the following equation:

$$F_{TH} = F_Z * D$$

Wherein, $F_{TH}$ is the threshold pressure value, $F_z$ is the average pressure value, D is the predetermined multiplier such as 0.7. The predetermined multiplier can be any other value and should not be limited to the figure exemplified in the present embodiment.

In order to obtain a better effect, the multiplier used to set the threshold resistance can be greater than 1, so that the possibility of reacting to the pressure that is too small can be reduced. Under most conditions, it is better to have the multiplier used to setup the threshold pressure value smaller than or equal to 1. Moreover, although in the embodiment mentioned above, the calibration is performed when the system is power on, this does not serve as a restrictive condition of the present invention, as it is known to those who are skilled in the related art that the calibration can be performed at any time point when it is being used in the physical environment. Furthermore, it is not necessary to perform the operations mentioned above every time when the system is power on, it needs only one time of operation, when the system is power on for the first time.

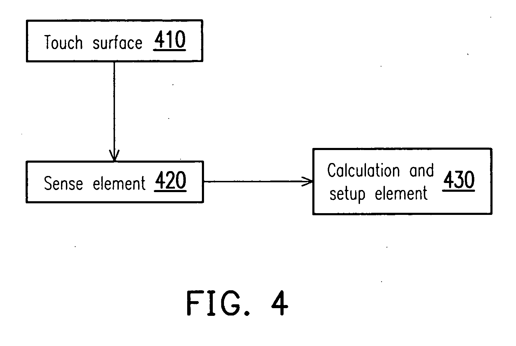

FIG. 4 schematically shows a block diagram of a touch panel pressure setup apparatus of a preferred embodiment according to the present invention. In the present embodiment, the touch panel pressure setup apparatus comprises a touch surface 410, a sense element 420, and a calculation and setup element 430. The touch surface 410 can be one similar to the resistance type touch panel shown in FIG. 1. When the threshold pressure of the touch panel is to be setup, the user has to perform a touch on the touch surface 410. With the contact that happens on the touch surface 410, the sense element 420 obtains a corresponding pressure value via the electronic signal variance of the touch surface 410 caused by the contact pressure, such as by the method to obtain the contact resistance mentioned in describing FIG. 1. Under good conditions, when setting the threshold pressure value, first the calculation and setup element 430 obtains an average pressure value by averaging multiple pressure values provided by the sense element 420, and then uses a value that is obtained from the average pressure value multiplied by a certain multiplier as the threshold pressure value.

The touch panel pressure setup apparatus provided by the present invention can be widely applied in diversified electronic instruments, especially for portable electronic instruments, such as the Hand-Held PC, the Pocket PC or the Personal Digital Assistant (PDA). By keeping the touch panel from generating unwanted reactions to improper jostling, the appropriate and variable threshold pressure setup is a good solution.

In summary, the advantages of the present invention are described as follows. The present invention can automatically regulate the system's threshold pressure value or the threshold resistance value according to the characteristics of the touch panel after the product is manufactured. With this, the same system can use touch panels having different specifications without having to adjust the setup status, thus it not only eliminates the limitation of the design and procurement, but it also saves the cost that is needed for testing.

Although the invention has been described with reference to a particular embodiment thereof, it will be apparent to one of the ordinary skill in the art that modifications to the described embodiment may be made without departing from the spirit of the invention. Accordingly, the scope of the invention will be defined by the attached claims not by the above detailed description.

**Claims**

**1.** A touch panel threshold pressure setup method, used in a touch panel that uses a resistance value to represent a magnitude of a pressure, comprising:

performing a touch, performing a plurality of times sampling when performing the touch to obtain a plurality of the contact resistance values;
obtaining an average contact resistance value according to the contact resistance values; and setting a threshold resistance value based on the average contact resistance value.

2. The touch panel threshold pressure setup method of claim 1, wherein the step of setting the threshold resistance value further comprises:

setting a multiplier; and
multiplying the multiplier by the average contact resistance to obtain the threshold resistance value.

3. The touch panel threshold pressure setup method of claim 2, wherein the multiplier is greater than 1.

4. The touch panel threshold pressure setup method of claim 1, wherein the step of performing the touch comprises: touching different points of the touch panel.

5. A touch panel threshold pressure setup method, comprising:

performing a touch, performing a plurality of times sampling when performing the touch to obtain a plurality of the pressure values; and setting a certain multiple of the average pressure value as a threshold pressure value.

6. The touch panel threshold pressure setup method of claim 5, wherein each of the pressure values is obtained from the calculation of a contact resistance value that is measured from the touch panel.

7. The touch panel threshold pressure setup method of claim 5, wherein the multiplier is smaller than or equal to 1.

8. A touch panel operation method, comprising:

touching a plurality of points when a calibration is processing, performing a plurality of times sampling when touching the points to obtain a plurality of the pressure values;
obtaining an average pressure value according to the pressure values;
setting a predetermined multiple of the average pressure value as a threshold pressure value; and
accepting a touch operation if a contact pressure is greater than a threshold pressure value when touching the touch panel.

9. The touch panel operation method of claim 8, wherein the pressure values are obtained from the calculation of a contact resistance value that is measured.

10. The touch panel operation method of claim 8, wherein the multiplier is smaller than or equal to 1.

11. A touch panel pressure setup method for a portable electronic instrument, suitable for a touch panel of the portable electronic instrument, comprising:

touching the touch panel, performing a plurality of times sampling when touching the touch panel to obtain a plurality of pressure values;
obtaining an average pressure value according to the pressure values; and
setting a certain multiple of the average pressure value as a threshold pressure value.

12. The touch panel pressure setup method for the portable electronic instrument of claim 11, wherein each of the pressure values is obtained from the calculation of a contact resistance value that is measured from the touch panel.

13. A touch panel pressure setup apparatus for a portable electronic instrument, suitable for the portable electronic instrument, comprising:

a touch surface, receiving a touch from outside;
a sense element, sensing the touch happened on the touch surface, converting the touch into a corresponding pressure value according to an electronic signal that is generated when the touch surface is touched; and
a calculation and setup element, receiving a plurality of the pressure values that are generated by a plurality of the touches, averaging the pressure values to obtain an average pressure value, further multiplying a multiplier by the average pressure value, and setting a value obtained from the multiplication as a threshold pressure value;

wherein, when a pressure value of the subsequent touch onto the touch surface is greater than the threshold pressure value, the portable electronic instrument generates a corresponding reaction.

14. The touch panel pressure setup apparatus for the portable electronic instrument of claim 13, wherein the portable electronic instrument comprises a Handheld PC.

15. The touch panel pressure setup apparatus for the portable electronic instrument of claim 13, wherein the portable electronic instrument comprises a Pocket PC.

16. The touch panel pressure setup apparatus for the portable electronic instrument of claim 13, wherein the portable electronic instrument comprises a Personal Digital Assistant (PDA).

FIG. 1

Using touch panel ~S200

Touching multiple points,performing multiple sampling in each touch ~S202

Obtaining an average contact resistance value from all samples ~S204

Setting a threshold resistance value ~S206

S208

Yes ← Contact resistance value> threshold resistance value? → No

S210 ~ Neglect

Accept ~S212

FIG. 2

```
                    ┌─────────────────────┐
                   ⟨   Using touch panel   ⟩──S300
                    └─────────────────────┘
                              │
                              ▼
        ┌──────────────────────────────────────────┐
        │  Touching multiple points,performing multiple │──S302
        │  sampling when the touch panel is touched  │
        └──────────────────────────────────────────┘
                              │
                              ▼
           ┌────────────────────────────────┐
           │   Obtainging an average pressure  │──S304
           │      value from all samples       │
           └────────────────────────────────┘
                              │
                              ▼
        ┌──────────────────────────────────────────┐
        │      Setting a threshold pressure value      │──S306
        └──────────────────────────────────────────┘
```

# FIG. 3

Touch surface <u>410</u>

Sense element <u>420</u>

Calculation and setup element <u>430</u>

FIG. 4

**EP 1 462 917 A1**

<table>
<tr><td></td><td><strong>European Patent Office</strong></td><td colspan="2" align="center"><strong>EUROPEAN SEARCH REPORT</strong></td><td><strong>Application Number</strong><br>EP 03 00 6938</td></tr>
</table>

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 6 239 790 B1 (MARTINELLI JOHN K ET AL) 29 May 2001 (2001-05-29) * column 14, line 10 - line 17; claim 1; figures 2,13 * | 1-16 | G06F3/033 |
| A | US 6 414 671 B1 (GILLESPIE DAVID W ET AL) 2 July 2002 (2002-07-02) * column 24, line 7 - line 67; claim 1; figures 1,8,9 * | 1-16 | |
| A | US 4 340 777 A (ROE DAVID B ET AL) 20 July 1982 (1982-07-20) * claim 1; figures 8,10 * | 1-16 | |
| A | US 6 506 983 B1 (WILSON GEOFFREY D ET AL) 14 January 2003 (2003-01-14) * claim 1; figures 6,7 * | 1-16 | |
| A | GB 2 125 971 A (RCA CORP) 14 March 1984 (1984-03-14) * claim 1; figures 8,10 * | 1-16 | |
| A | US 4 511 760 A (LEVINE JAMES L ET AL) 16 April 1985 (1985-04-16) * column 9, line 15 - line 26; figure 6B * | 1-16 | TECHNICAL FIELDS SEARCHED (Int.Cl.7)<br><br>G06F |

The present search report has been drawn up for all claims

| Place of search | Date of completion of the search | Examiner |
|---|---|---|
| BERLIN | 11 July 2003 | Kirsten, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 03 00 6938

This annex lists the patent family members relating to the patent documents cited in the above-mentioned European search report.
The members are as contained in the European Patent Office EDP file on
The European Patent Office is in no way liable for these particulars which are merely given for the purpose of information.

11-07-2003

| Patent document cited in search report | | Publication date | Patent family member(s) | | Publication date |
|---|---|---|---|---|---|
| US 6239790 | B1 | 29-05-2001 | US | 5943044 A | 24-08-1999 |
| | | | WO | 9806079 A1 | 12-02-1998 |
| US 6414671 | B1 | 02-07-2002 | US | 2002093491 A1 | 18-07-2002 |
| | | | US | 5880411 A | 09-03-1999 |
| | | | US | 5543591 A | 06-08-1996 |
| | | | US | 5914465 A | 22-06-1999 |
| | | | US | 5374787 A | 20-12-1994 |
| | | | US | 6380931 B1 | 30-04-2002 |
| | | | US | 6028271 A | 22-02-2000 |
| | | | US | 2003112228 A1 | 19-06-2003 |
| | | | CN | 1185844 A | 24-06-1998 |
| | | | EP | 0829043 A1 | 18-03-1998 |
| | | | JP | 11506559 T | 08-06-1999 |
| | | | WO | 9736225 A1 | 02-10-1997 |
| | | | US | 5861583 A | 19-01-1999 |
| | | | AU | 4001995 A | 02-05-1996 |
| | | | EP | 1288773 A2 | 05-03-2003 |
| | | | EP | 0870223 A1 | 14-10-1998 |
| | | | WO | 9611435 A1 | 18-04-1996 |
| | | | AU | 3544495 A | 27-03-1996 |
| | | | DE | 69527295 D1 | 08-08-2002 |
| | | | DE | 69527295 T2 | 17-10-2002 |
| | | | EP | 0777888 A1 | 11-06-1997 |
| | | | JP | 10505183 T | 19-05-1998 |
| | | | KR | 274772 B1 | 15-12-2000 |
| | | | WO | 9607981 A1 | 14-03-1996 |
| | | | US | 5543590 A | 06-08-1996 |
| | | | US | 5488204 A | 30-01-1996 |
| | | | US | 5942733 A | 24-08-1999 |
| | | | US | 5889236 A | 30-03-1999 |
| | | | US | 5543588 A | 06-08-1996 |
| | | | US | 5495077 A | 27-02-1996 |
| | | | US | 6239389 B1 | 29-05-2001 |
| | | | DE | 69324067 D1 | 29-04-1999 |
| | | | DE | 69324067 T2 | 15-07-1999 |
| | | | EP | 0574213 A1 | 15-12-1993 |
| | | | US | 5648642 A | 15-07-1997 |
| | | | US | 5841078 A | 24-11-1998 |
| US 4340777 | A | 20-07-1982 | CA | 1170368 A1 | 03-07-1984 |
| | | | DE | 3171155 D1 | 01-08-1985 |
| | | | EP | 0065567 A1 | 01-12-1982 |
| | | | GB | 2089995 A ,B | 30-06-1982 |
| | | | GB | 2138567 A ,B | 24-10-1984 |
| | | | JP | 57501935 T | 28-10-1982 |

EPO FORM P0459

For more details about this annex : see Official Journal of the European Patent Office, No. 12/82

**ANNEX TO THE EUROPEAN SEARCH REPORT
ON EUROPEAN PATENT APPLICATION NO.**

EP 03 00 6938

This annex lists the patent family members relating to the patent documents cited in the above-mentioned European search report.
The members are as contained in the European Patent Office EDP file on
The European Patent Office is in no way liable for these particulars which are merely given for the purpose of information.

11-07-2003

| Patent document cited in search report | | Publication date | Patent family member(s) | | Publication date |
|---|---|---|---|---|---|
| US 4340777 | A | | WO | 8202106 A1 | 24-06-1982 |
| US 6506983 | B1 | 14-01-2003 | US | 5940065 A | 17-08-1999 |
| | | | AU | 710157 B2 | 16-09-1999 |
| | | | AU | 2210497 A | 01-10-1997 |
| | | | CA | 2242663 A1 | 18-09-1997 |
| | | | CN | 1220752 A | 23-06-1999 |
| | | | EP | 0882281 A1 | 09-12-1998 |
| | | | JP | 3278117 B2 | 30-04-2002 |
| | | | JP | 2000513433 T | 10-10-2000 |
| | | | WO | 9734273 A1 | 18-09-1997 |
| GB 2125971 | A | 14-03-1984 | US | T104303 I4 | 05-06-1984 |
| | | | DE | 3330400 A1 | 23-02-1984 |
| | | | FR | 2532086 A1 | 24-02-1984 |
| | | | JP | 59094136 A | 30-05-1984 |
| US 4511760 | A | 16-04-1985 | DE | 3466301 D1 | 22-10-1987 |
| | | | EP | 0126345 A1 | 28-11-1984 |
| | | | HK | 98889 A | 22-12-1989 |
| | | | JP | 1717274 C | 14-12-1992 |
| | | | JP | 3077527 B | 10-12-1991 |
| | | | JP | 59216237 A | 06-12-1984 |
| | | | JP | 1651025 C | 30-03-1992 |
| | | | JP | 3015206 B | 28-02-1991 |
| | | | JP | 63140320 A | 11-06-1988 |

EPO FORM P0459

For more details about this annex : see Official Journal of the European Patent Office, No. 12/82